(19) Europäisches Patentamt

European Patent Office

Office européen des brevets

(11) **EP 3 076 136 B1**

(12) **EUROPEAN PATENT SPECIFICATION**

(45) Date of publication and mention
of the grant of the patent:
**07.11.2018 Bulletin 2018/45**

(21) Application number: **14866749.6**

(22) Date of filing: **26.11.2014**

(51) Int Cl.:
***G01D 5/241*** *(2006.01)*

(86) International application number:
**PCT/CN2014/092307**

(87) International publication number:
**WO 2015/078378 (04.06.2015 Gazette 2015/22)**

(54) **CAPACITIVE SENSOR AND COMBINED CAPACITIVE DISPLACEMENT MEASUREMENT
SENSING SYSTEM**

KAPAZITIVER SENSOR UND KOMBINIERTES KAPAZITIVES SENSORSYSTEM ZUR
VERDRÄNGUNGSMESSUNG

CAPTEUR CAPACITIF ET SYSTÈME COMBINÉ DE DÉTECTION ET DE MESURE DE
DÉPLACEMENT CAPACITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2013 CN 201310612166**

(43) Date of publication of application:
**05.10.2016 Bulletin 2016/40**

(73) Proprietor: **Lin, Li**
**Haidian District, Beijing 100084 (CN)**

(72) Inventor: **Lin, Li**
**Haidian District, Beijing 100084 (CN)**

(74) Representative: **Bittner, Bernhard
Hannke Bittner & Partner
Patent- und Rechtsanwälte mbB
Prüfeninger Strasse 1
93049 Regensburg (DE)**

(56) References cited:
**EP-A1- 1 327 861       CN-A- 1 389 704
CN-A- 1 497 237        DE-A1- 10 133 216
DE-U1-202004 001 444   US-A- 4 636 792
US-A- 4 636 792        US-A1- 2006 028 214**

**Description**

**FIELD OF THE INVENTION**

The present invention relates to a capacitive sensor and a combined capacitive displacement measurement sensing system, and in particular, to a capacitive displacement sensor and its combined capacitive displacement measurement system based on relative area variations of capacitance electrodes.

**BACKGROUND OF THE INVENTION**

It is known that two parallel conducting electrodes can form a capacitor, and the capacitance of the capacitor is approximately proportional to the dielectric constant of the medium between the two parallel electrodes, proportional to the relative (overlapped) area of two electrode s, and inversely proportional to the gap distance between the two electrodes. Therefore, the capacitance changes when the relative area and the gap distance between the two electrodes change. Those skilled in the art applied above principles to fabricate various sensors including displacement (position) measuring ones.

Based on the above principles, a displacement can be measured using capacitance in two different ways. One method is detecting capacitance variation due to a gap variation between the two electrodes of a capacitor, where the direction of the motion is perpendicular to the electrode surfaces. The capacitance of a capacitor is extremely sensitive to the gap variations, in particular the gap is small. In addition, manufacturing technology is relatively easy to obtain small gap variation almost without relative overlapped area variation. Currently, this kind of method is found in nano-positioning applications. These sensors can sense a displacement as small as a few picometers, while they are limited to a measurement range of a few hundred micrometers.

Another method is detecting a capacitance variation due to a variation of an overlapped area between two parallel electrodes of a capacitor, where the motion is parallel to the surfaces of the electrodes. Due to reasons of manufacturing simplicity and low cost for production, such sensors based on the principle of area variation are demanded in the market, but with significant challenges, it is very difficult in practical applications. Because it is very difficult to measure the variation of an overlapped area by having a motion in a parallel direction to the electrode surface without any variation of the gap distance due to motion perpendicular to the electrode surfaces. As mentioned above, the capacitance of a capacitor is extremely sensitive to its gap distance. It can be estimated, for example, that increasing or decreasing a capacitor gap of 100 micrometers by one micrometer, creates a capacitance variation of one percent. A 100 micrometer gap is in the practical range while a one micrometer tolerance for mechanical moving parts is quite a challenge for economical mass production. The one percent uncertainty error is unacceptable in terms of accuracy for most applications. As a result of difficult gap variation control, a sensor based on area variation is impractical unless useful compensation techniques are developed to reduce influence of gap variation.

EP Application Publication No. 1327861 A1 discloses a Capacitance-Based Position Sensor. This publication is fully incorporated hereby as reference herein.

US Application Publication No. 4636792 A discloses a Capacitive Angular Position Transducer. This publication is fully incorporated hereby as reference herein.

DE Application Publication No. 10133216 A1 all discloses a device for detecting position. This publication is fully incorporated hereby as reference herein.

**SUMMARY OF THE INVENTION**

To overcome the above mentioned problems, the present invention provides a capacitive sensor, comprising at least two stationary components STATORs, wherein each combined stationary components STATORs includes:

an electrically insulated substrate, a first capacitance electrode set comprising m conductive electrodes connected electrically and a second capacitance electrode set comprising m conductive electrodes connected electrically on the electrically insulated substrate, wherein the electrodes of the first capacitance electrode set and the second capacitance electrode set are same in number and in shape, and are arranged alternatively at an equal distance from one another on the electrically insulated substrate;

at least two moving components MOVERs that can move relatively to the stationary components STATORs in a linear or rotational manner, wherein the moving component MOVER and the stationary component STATOR are same in number, each of the moving component MOVERs comprising:

an electrically insulated substrate, a ground electrode set comprising n ground electrodes connected electrically on the electrically insulated substrate, wherein the ground electrodes are same in shape and arranged alternatively at an equal distance from one another on the electrically insulated substrate; where n is less than or equal to m;

wherein, the width of each ground electrode of the moving component MOVER in the movement direction is set so that, in the process of movement or rotation , each ground electrode form two variable capacitors with one capacitance electrode of the first capacitance electrode set and one capacitance electrode of the second capacitance electrode set, respectively, thereby the ground electrode set of the moving component MOVER together with the first capacitance electrode set and the second capacitance electrode set of the stationary component STATOR forms two variable capacitance sets;

the capacitive sensor comprises at least two stationary components STATORs or at least two moving component MOVERs, wherein the electrodes of different stationary components STATORs or the electrodes of different moving components MOVERs offset a distance Wss in moving direction of the moving component MOVER, in order to make the transition locations of cycle curves offset mutually, wherein, the cycle curves are outputted by systems constituted by offset components respectively, and Wss= (Wc+Wcs)/2, where Wc is the widths or angular widths of the electrode of the stationary components STATORs, Wcs denotes the spaces or angular spaces between adjacent electrodes of the stationary components STATORs.

According to one exemplary embodiment of the present invention, the corresponding electrodes of different stationary components STATORs are aligned one to one, the corresponding electrodes of different moving components MOVERs are aligned one to one, and one pair of the aligned electrodes from different stationary STATORs and one ground electrode form a pair of two variable capacitors.

According to another exemplary embodiment of the present invention, one pair of adjacent electrodes which are on the same stationary STATOR and respectively from the first capacitance electrodes set and the second capacitance electrodes set and the corresponding ground electrode form a pair of two variable capacitors, constituting a differential compensation structure.

Preferably, the electrodes are planar structures formed with a flat rectangular section or a flat sectorial section or a flat triangular or a flat sectorial triangular section of planar structure, or are formed with a cylindrical rectangular section or a cylindrical triangular section of cylindrical surface.

According to one preferable exemplary embodiment of the present invention, (Wg+Wgs)=2*(Wc+Wcs), $Wcs \leq Wc$ and $Wc \leq Wg \leq (Wc+2*Wcs)$, where Wc and Wg are the width or angular width of the electrode of the stationary component STATOR and the moving component MOVER respectively, and Wcs and Wgs are the spaces or angular spaces between adjacent electrodes of the stationary component STATOR and the moving component MOVER.

According to another preferable exemplary embodiment of the present invention, if the electrodes are formed with a flat rectangular section of planar structure, Wc is between 0.001mm and 200mm, Wcs is between 0.001mm and 200mm, and Lc is between 0.005mm and 200mm, where Wc denotes the width of the electrodes of the stationary component STATOR, Wcs denotes the spaces between adjacent electrodes of the stationary component STATOR and Lc denotes the length of the electrodes of the stationary component STATOR.

According to another preferable exemplary embodiment of the present invention, if the electrodes are formed with a flat sectorial section of planar structure or a cylindrical rectangular section of cylindrical surface, Wc is between 0.001° and 180°, Wcs is between 0.001° and 270°, Lc is between 0.1mm and 200mm, where the Wc denotes the width of the electrodes of the stationary component STATOR, Wcs denotes the angular spaces between adjacent electrodes of the stationary component STATOR and Lc denotes the rotation radius of electrodes of the stationary component STATOR.

According to another preferable exemplary embodiment of the present invention, $Lc \neq Lg$ , Lc denotes the rotation radius of the electrodes of the stationary component STATOR, and Lg denotes the rotation radius of the ground electrodes of the moving component STATOR.

Preferably, the capacitive sensor of the invention further comprises a stationary component STATOR and a moving component MOVER for the purpose of coarse measurement, wherein the stationary component STATOR consists of two electrodes, the width or the angular width of the two electrodes is denoted by Wcl, and the moving component MOVER consists of a ground electrode, the width or the angular width of the ground electrode is denoted by Wsl, wherein $Wcl \leq Wc * m + Wcs * (m-1)$ and $Wsl \leq (Wc + Wcs) * m$.

Preferably, the electrically insulated substrate of the stationary component STATOR is configured with an electrical shielding layer.

Preferably, the stationary component STATOR and the moving component MOVER are manufactured from a printed circuit board (PCB) method, a various thin-film deposition method, or a printed electronics method.

Preferably, the moving component MOVERs are manufactured from a metal thin sheet or thin tube, and the two surfaces of the metal thin sheet or thin tube service as ground electrodes to form more variable capacitance set with more stationary component STATORs.

The present invention further provides a combined capacitive displacement measurement sensing system comprising the abovementioned capacitive sensor, further comprising:

a signal processing system for measuring electronic signals of the first capacitance electrode set and the second capacitance electrode set on the STATORs to obtain displacement data , wherein the ground of the signal processing system is connected with the ground of the electrode set on the MOVERs.

The combined capacitive displacement measurement sensing system according to the present invention reaches its precision measurements by designing the shapes of the electrodes and arranging positions of electrodes for obtaining mutual compensation between variable capacitors, reducing the impact due to gap variation during motion and implementing long-range absolute measurement, for example, a linear displacement measurement with 1 meter range and nanometer precision, and an angular displacement measurement with 360° full orientation range and arc-second precision.

**BRIEF DISCRIPTION OF THE DRAWINGS**

Fig.1a is an exemplary side view of one embodiment containing two stationary component STATORs and one double sided moving component MOVER, and also shows the geometric construction of the capacitive electrode constructed by these components.

Fig.1b is an exemplary top view of the embodiment of Fig.1a, the embodiment shows the interaction between the capacitive electrode of stationary component STATOR and the ground electrode of the moving component MOVER.

Fig.2 shows how the capacitors are created and destroyed in the embodiment shown in Fig. 1 and also shows how the capacitors are numbered.

Fig.3 is a circuit connection block diagram of the combined capacitive displacement measurement sensing system according to the present invention.

Fig.4 is another circuit connection block diagram of the combined capacitive displacement measurement sensing system according to the present invention.

Fig.5 is a digital output curve of the embodiment in Fig. 1 and shows the dead zone.

Fig.6 is a top view of one embodiment of the sensor of the present invention for eliminating the dead zone, and the embodiment contains the stationary components STATOR with two electrodes offset by Wss and two aligned moving component MOVER, and shows the geometric construction of these components.

Fig.7 is an exemplary example of the digital output curves of the embodiment shown in Fig. 6 and shows how the dead zones are compensated according to this embodiment.

Fig.8 is an exemplary top view of another embodiment for implementing the output curves of Fig.7, containing two aligned stationary components STATOR and the moving component MOVER with two ground electrodes offset by Wss, and shows the geometric construction of these components.

Fig.9 is a side view of the embodiment of Fig.6 for implementing the output curve of Fig.7 and shows the geometric construction of these components.

Fig.10 is a side view of the embodiment of Fig.8 for implementing the output curve of Fig.7 and shows the geometric construction of these components.

Fig.11a and Fig.11b are two embodiments for manufacturing the moving component MOVER.

Fig.12a to Fig.12c are schematic structure diagrams of an combined capacitive displacement measurement sensing system with coarse measurement function.

Fig.13a shows one embodiment for completely assembling the combined capacitors for absolute linear displacement measurement.

Fig.13b and Fig.13c are schematic structure diagrams of the stationary component STATOR and the moving component MOVER of Fig.3a.

Fig.14a is an exemplary isometric view of one possible embodiment of a completely assembled sensor system for an absolute linear displacement measurement.

Fig.14b is a schematic structure diagram of the stationary component STATOR and the moving component MOVER of Fig.14a.

Fig.15a is an exemplary isometric view of one possible embodiment of a completely assembled sensor system for an absolute angular displacement measurement.

Fig.15b is a schematic structure diagram of the stationary component STATOR and the moving component MOVER of Fig.15a.

Fig.16a is an angular displacement sensor with a full 360-degree measurement range.

Fig.16b shows a partial unassembled diagram of the stationary component STATOR and the moving component MOVER.

**DETAILED DESCRIPTION OF THE EMBODIMENTS**

In order to clearly understand the technical problems solved, the technical solutions adopted and the technical effects achieved by the present invention, specific embodiments are further illustrated below based on the attached drawings.

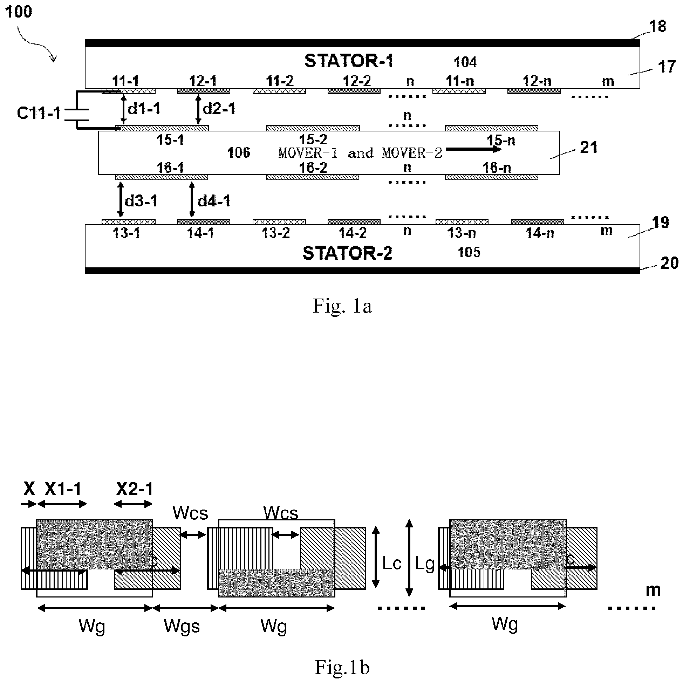

Referring to Fig.1a, the capacitive sensor 100 according to the present invention comprises at least one stationary component STATOR, shown two in Fig.1a, a stationary component STATOR-1 104 and a stationary component STATOR-2 105. The stationary component STATOR-1 104 consists of a first capacitance electrode set 11, comprising **m** conductive electrodes arranged at an equal distance from one another, indicated by 11-1, 11-2, ...11-n...11-m; and a second capacitance electrode set 12, comprising m conductive electrodes arranged at an equal distance from one another, indicated by 12-1, 12-2... 12-n ... 12-m. The stationary component STATOR-2 105 has a first capacitance electrode set 13, comprising m conductive electrodes arranged at an equal distance from one another, indicated by 13-1, 13-2... 13-n ...11-m; and a second capacitance electrode set 14, comprising **m** conductive electrodes arranged at an equal distance from one another, indicated by 14-1, 14-2... 14-n ...14-m. And the electrodes are same in shape. The capacitive sensor 100 further comprises a moving component MOVER-106, the number of which is same as the stationary component STATOR, shown two in Fig. 1a, that are a moving component MOVER-1 and a moving component MOVER-2. The moving component MOVER-1 comprises a first ground electrode set 15, comprising **n** ground electrodes arranged at an equal distance from one another, indicated by 15-1, 15-2, ...15-n, where n≤m; and the moving component MOVER-2 comprises a second ground electrode set arranged at an equal distance from one another, indicated by 16-1, 16-2... 12-n, where n≤m. The ground electrodes are same in shape. And the m in the first capacitance electrode set and the second capacitance electrode set of the stationary component STATOR-1 and the stationary component STATOR-2 can be same, it is a positive integer. And the number **n** in the first ground electrode and the second ground electrode is same, it is also a positive integer, where **n** is less than or equal to **m**.

The first capacitance electrode set 11 and the second capacitance electrode set 12 of the stationary component STATOR-1 104 are positioned on the same side of an electrically insulated substrate 17, and an the electrical shielding layer 18 is optionally configured on the other side of the electrically insulated substrate 17. The first capacitance electrode set 11, the second capacitance electrode set 12, the electrically insulated substrate 17 and the electrical shielding layer 18 together form another composite unit, serving as the stationary component STATOR-1 104 of the sensor.

The first capacitance electrode set 13 and the second capacitance electrode set 14 of the stationary component STATOR-2 105 are positioned on the same side of an electrically insulated substrate 19, and an the electrical shielding layer 20 is optionally configured on the other side of the electrically insulated substrate 19. The first capacitance electrode set 13, the second capacitance electrode set 14, the electrically insulated substrate 19 and the electrical shielding layer 20 together form another composite unit, serving as the stationary component STATOR-2 105 of the sensor.

The first ground electrode 15 and the second ground electrode 16 are respectively positioned on two sides of an electrically insulated substrate 21. The first ground electrode 15, the second ground electrode 16 and the electrically insulated substrate 21 together form a composite unit, serving as the moving component MOVER 106 (comprising MOVER-1 and MOVER-2) of the sensor.

Please be noted that although two composite units of the capacitive sensor are shown herein, the present invention can also implement one composite unit or more.

As an exemplary embodiment, the electrical shielding layer 18, 20 are optional components, not mandatary.

The stationary component STATOR-1 104 and the stationary component STATOR-2 105 are substantially parallel to each other. The moving component MOVER 106 can displace in a substantially parallel manner with respect to the stationary component STATOR-1 104 and the stationary component STATOR-2 105.

Still referring to Fig. 1a, the gap between the first electrode 11-1 of the first capacitance electrode set 11 and the first electrode 15-1 of the first ground electrode set 15 of MOVER-1 of MOVER 106 is represented as d1-1. The gap between the first electrode 12-1 of the second capacitance electrode set 12 and the first electrode 15-1 of the first ground electrode set 15 of MOVER-1 of MOVER 106 is represented as d2-1. In the stationary component STATOR-2 105, the gap between the first electrode 13-1 of the first capacitance electrode set 13 and the first electrode 16-1 of the second ground electrode set 16 of MOVER-2 of MOVER 106 is represented as d3-1. The gap between the first electrode 14-1 of the second capacitance electrode set 14 and the first electrode 16-1 of the second ground electrode set 16 of MOVER-2 of MOVER 106 is represented as d4-1. The gaps d1-1, d2-1, d3-1, and d4-1 may all be substantially equal to each other, as shown in the embodiment of Fig.1, the gaps d1-1, d2-1, d3-1, and d4-1 can be slightly different within practical fabrication and assembly tolerances without significantly reducing measurement accuracy.

Fig.1b is the top view of Fig.1a. Referring to Fig.1b, the widths and lengths of the electrodes of each capacitance electrode set are represented as Wc and Lc, respectively. The electrodes of the first capacitance electrode set 11 and the electrodes of the second capacitance electrode set 12 are arranged alternatively, and the spaces between two adjacent electrodes are represented as Wcs. The width and length of electrodes of each ground electrode set are represented as Wg and Lg. The spaces between two adjacent electrodes of the first ground electrode are represented as Wgs. In some specific embodiments, Lg can be either larger or smaller than Lc but not equal to Lc as this size difference can eliminate a misalignment error.

Continuing referring to Fig.1a and Fig.1b, the width of the overlap between electrode 11-1 and the ground electrode 15-1 is X1-1, and the overlap area A1-1 is substantially equal to the multiplication of width X1-1 and the length Lc (Taking Lg is larger than Lc as an example). Similarly, the overlap width between electrode 12-1 and the ground electrode 15-1 is X2-1, and the overlap area A2-1 is substantially equal to the multiplication of width X2-1 and the length Lc. The overlap width between electrode 13-1 and the ground electrode 16-1 is X3-1, and the overlap area A3-1 is substantially equal to multiplication of width X3-1 and the length Lc of the electrodes. The overlap width between electrode 14-1 and ground electrode 16-1 is X4-1, and the overlap area A4-1 is substantially equal to multiplication of width X4-1 and the length Lc. The variations of these overlap area is linear functions of displacement X of the moving component MOVER 106. For example, for the first electrode 11-1 of the first capacitance electrode set 11, A1-1 is determined as:

$$A1\text{-}1 = X1\text{-}1 * Lc = (Wc\text{-}X) * Lc \qquad [\text{equation } 1];$$

And for the first electrode 12-1 of the second capacitance electrode set 12, A2-1 is determined as:

$$A2\text{-}1 = X2\text{-}1 * Lc = (Wg\text{+}X\text{-}Wc\text{-}Wcs) * Lc \qquad [\text{equation } 2];$$

Therefore, the area variations can be represented by the changes of the displacement, and the area variations is proportional to the resulting capacitance change. Based on above principle, an electrode K-i of a capacitance electrode set and an electrode G-j of a ground electrode set can form a variable capacitor CK-j. For example, the electrode 11-1 of the first capacitance electrode set 11 and electrode 15-1 of the first ground electrode set 15 can form a capacitor C11-1 with a capacitance proportional to the value of (A1-1/d1-1). Furthermore, the electrode 11-2 of the first capacitance electrode set 11 and electrode 15-2 of the first ground electrode set 15 can form a capacitor C11-2; similarly, the electrode 12-1 and the electrode 15-1 can form C12-1; the electrode 13-1 and the electrode 16-1 can form C13-1; the electrode 14-1 and the electrode 16-1 can form C14-1; the electrode 11-n and the electrode 15-n can form C11-n; the electrode 12-n and the electrode 15-n can form C12-n; the electrode 13-n and the electrode 16-n can form C13-n; the electrode 14-n and the electrode 16-n can form C14-n; and so on. The capacitance of capacitor C11-2 is proportional to the value of (A1-2/d1-2), the capacitance of capacitor C12-1 is proportional to the value of (A2-1/d2-1) t, the capacitance of capacitor C13-1 is proportional to the value of (A3-1/d3-1), the capacitance of capacitor C14-1 is proportional to the value of (A4-1/d4-1), and so on.

In the above four exemplary capacitance electrode set, there are numbers (m-n) of electrodes which are not able to form capacitors with the electrode of the ground electrodes set. But as the moving component MOVER 106 displaces, there are new capacitors created at the same time when some existing capacitors are destroyed. And the number of newly created and destroyed capacitors is equal to each other. Therefore, the number of capacitors is same throughout any movement, while the total capacitances of the systems vary as the overlapped areas vary.

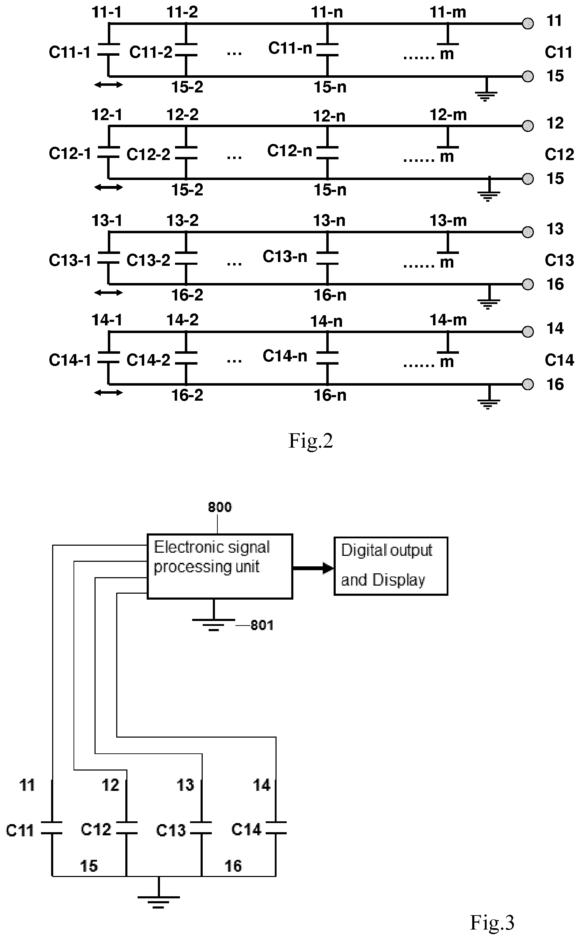

The capacitors formed by the capacitance electrode set K and the ground electrode set G may be in parallel connections. In the exemplary embodiment shown in Fig. 2, there are four capacitive sets, C11, C12, C13 and C14. C11 and C13 can be aligned in the direction perpendicular to the vertical so that the two aligned sets can be used in parallel connection and superimposed together to form direct compensation. C12 and C14 may also be superimposed together to form direct compensation.

The electrodes of the first capacitance electrode set 11 of the stationary component STATOR-1 104 and the electrodes of the first capacitance electrode set 13 of the stationary component STATOR-2 105 are on different substrates, but in alignment with respect to each other. The electrodes of these two first capacitance electrode sets can also be in alignment with each other within an allowable degree of error due to fabrication and assembly. Similarly, two second capacitance electrode sets also have the abovementioned aligned structure. The first ground electrode set 15 and the second electrode set 16 are also in alignment with each other. The capacitors formed by pairs of electrode sets can directly compensate each other against undesired motion in the gap direction, which may be perpendicular to the designed motion direction, consequently reducing overall measurement errors. For example, when the gap d1-1 of the capacitor C11-1 increases/decreases, the gap d3-1 of the capacitor C13-1 decreases/increases instead, directly compensating for changes in capacitance with each other. As a result, the capacitive sets C11 and C13, and the capacitive sets C12 and C14 can be superimposed to form direct compensation for reducing overall measurement errors.

Unlike the superimposed direct compensation between the capacitive sets C11 and C13, the capacitive sets C11 and C12 are arranged to form differential compensation, similarly, C13 and C14 have the same function.

Referring to Fig.1a, the capacitor C11-1 constructed by electrode 11-1 and electrode 15-1 to form differential compensation with the capacitor C12-1 constructed by electrode 12-1 and electrode 15-1. When the moving component MOVER 106 displaces to the right at the one half point of the repeat cycle for example, the overlapped width between the ground electrode 15-1 and the capacitance electrode 11-1 is equal to the overlapped width between ground electrode 15-1 and the capacitance electrode 12-1, the capacitor C11-1 and the capacitor C12-1 form a full differential compensation. Therefore, the capacitive set C11 and the capacitive set C12 can also form a differential compensation, and the capacitive set C13 and the capacitive set C14 can also form a differential compensation, against, for example, undesired motion in the gap direction, that may be perpendicular to the designed motion direction.

Referring to Fig. 1a, multiple the capacitive sets can be arranged to form a combination of direct compensation and differential compensation interactions that may optimally reduce the influence of the motion in the gap direction. The capacitive set C11 can form direct compensation with the capacitive set C13 and simultaneously form differential compensation with the capacitive set C12. The capacitive set C12 can form direct compensation with the capacitive set C14 and simultaneously form differential compensation with the capacitive set C11. The capacitive set C13 can form direct compensation with the capacitive set C11 and simultaneously form differential compensation with the capacitive set C14. The capacitive set C14 can simultaneously form direct compensation with the capacitive set C12 and differential compensation with the capacitive set C13.

The repeating patterns of electrically-conductive electrodes of both the capacitive set and the ground electrode sets can be fabricated onto insulated substrates by several techniques. Fabrication techniques include, but are not limited to, printed circuit board (PCB) methods, various thin-film deposition methods, printed electronics methods, or any other known or desired method known to a person of ordinary skill in the art. Exemplary conductive materials for the electrodes include, but are not limited to, copper, silver, gold, aluminum and their alloys, their coatings and inks, or any other desired material or combination of materials known to a person of ordinary skill in the art. Exemplary insulating substrate materials include, but are not limited to, various resin laminates, glasses, ceramics and plastic sheets and tubes, or any other desired material or combination of materials known to a person of ordinary skill in the art.

Referring to Fig. 1b, the widths and lengths of the electrodes of the capacitance electrode sets are represented as Wc and Lc. The applicable range of width for Wc is between 0.001mm and 1000mm, with an exemplary range of between 0.01mm and 200mm. An applicable range of length for Lc is between 0.1mm and 1000mm, with an exemplary range of between 0.1mm and 200mm. The spaces between electrodes of two adjacent capacitance electrode sets are represented as Wcs. The applicable range of width for Wcs is between 0.001mm and 200mm. The width and length of the electrodes of the ground electrode set are represented as Wg and Lg. The spaces between the electrodes of the first ground electrode set 15 and the spaces between the electrodes of the second ground electrode set 16 are represented as Wgs, the relationship is:

$$\mathrm{Wg} + \mathrm{Wgs} = 2 * (\mathrm{Wc} + \mathrm{Wcs}). \qquad [\text{equation } 3]$$

In some exemplary embodiments, the relationship is:

$$\mathrm{Wc} \leqslant \mathrm{Wg} \leqslant (\mathrm{Wc} + 2*\mathrm{Wcs}). \qquad [\text{equation } 4]$$

In a further exemplary embodiment, the length Lg of the electrodes of ground electrode set is not equal to the length Lc of the electrodes of the capacitance electrode sets, for assuring that the overlapped length between two capacitance electrodes are unchanged in the longitudinal direction of the electrodes. And the electrodes of the present invention may be rectangular shapes or other shapes suitable for real applications. And the capacitance electrode sets and the ground electrodes are not limited to being planar or flat.

Fig. 3 is a circuit connection block diagram of the combined capacitive displacement measurement sensing system according to the present invention, the capacitive set C11, C12, C13 and C14 can be connected to an electronic signal processing unit 800. The ground electrode may all be connected to the ground 801 of processing unit through conductive components. The electronic signal processing unit 800 may be any desired type of signal processor, including, but not limited to, an analog signal conditioner, an analog to digital converter, a digital signal processor and the like. The signal processing system may produce a digital output.

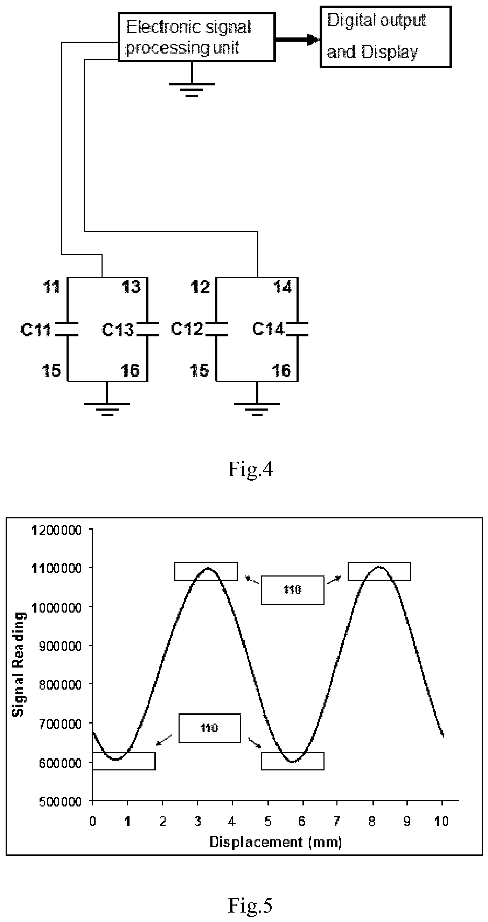

In specific practical applications, the capacitive sets C11, C12, C13 and C14 can be independently measured, respectively, and be processed by the electronic signal processing unit 800. In some embodiments, for example, in the direct compensation structure formed by the capacitive sets C1 and C13, capacitive sets C11 and C13 may be in a parallel connection and they can be measured together and be processed by the electronic signal processing unit 800. So are the capacitive sets C12 and C14. Taking the advantage of the parallel configurations, only two independent measurements need be utilized. The measurement circuit can be simplified as shown in Fig. 4. The capacitive sets C11, C12, C13, C14 and the electronic signal processing unit together form a complete capacitive displacement measurement sensing system.

Fig.5 is a digital output curve of above capacitive displacement measurement sensing system, as shown in Fig.5, the curve can indicate that the output signal has a cyclic behavior which makes a long range measurement possible. However, it may also introduce "dead zones" 110 as marked around the transition locations, where the uncertainty of measurement can be unacceptably large. The dead zones can be unavoidable because of the existence of spaces (Wcs) between adjacent electrodes for the differential compensation. For direct compensation, the dead zones may be unavoidable because the edges of electrodes are not able to be made with nanometer precision. Without resolving the dead zone problem, measurement may be limited to less than a half cycles distance, and not possible to make a longer range measurement.

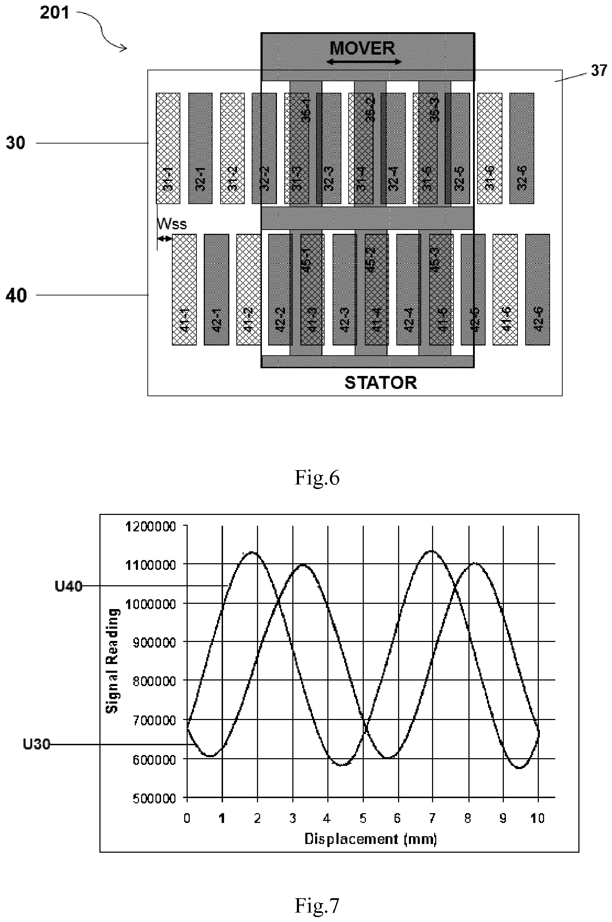

Referring to Fig. 6, in one specific exemplary embodiment, the dead zone problem can be resolved by a composite measurement system 201 constructed by two capacitive sensors. The composite measurement system includes a first system 30 and a second system 40. And the first system 30 and the second system 40 may be similar to the above described capacitive sensor 100 or a part of capacitive sensor 100.

The first system 30 includes: a capacitance electrode set 31 comprising electrodes 31-1, 31-2, ..., 31-m spaced equally; a capacitance electrode set 32 comprising electrodes 32-1, 32-2, ..., 32-m spaced equally; and a ground electrode set 35 comprising electrodes 35-1, 35-2, ..., 35-n spaced equally. In a specific embodiment of the present invention, for demonstration simplicity, the number m is 6, n is 3, that is, there are 12 electrodes in total in the capacitance electrode sets 31, 32. And the electrodes of the capacitance electrode set 31 and the electrodes of the capacitance electrode set 32 can be on the same side of an electrically insulated substrate 37 and be arranged alternatively at an equal distance from one another, forming stationary components STATORs. And three electrodes of the ground electrode 35 can be on a different electrically insulated substrate, arranged at an equal distance from each other, forming the moving components MOVERs. When the moving components MOVERs displace in a parallel manner with respect to the stationary components STATORs, it results in variations of overlap areas between the capacitance electrode sets and the ground electrode sets, forming variable capacitors C31-1, C31-2, C31-3, C32-1, C32-2, and C32-3, at this time, the capacitive sets C31 and C32 can together form a differential compensation reducing the influence of undesired motion in the gap direction. The second system 40 has same structure as the first system 30. Each electrode of the ground electrodes set of the first system 30 corresponds to each electrode of the ground electrodes set of the second system 40. The electrodes of the capacitance electrode sets of the second system 40 are shifted a distance of Wss with respect to the electrodes of the capacitance electrode sets of the first system 30, here, Wss = (Wc+Wcs)/2, where Wc is the widths of the electrodes of the capacitance electrode sets and Wcs is the space between adjacent electrodes of the capacitance electrode sets.

Fig.7 shows an output curve of a composite measurement system 201, including a cycle curve U30 output by the first system 30 and a cycle curve U40 output by the second system 40. Dead zones may still exist on each individual curve, however, these two curves are spaced because of the existence of Wss. At the dead zone locations of the curve U30 from the first system 30, the cycle curve U40 from the second system 40 shows good or desired linear behavior. Similarly, at the dead zone locations of the curve U40 from the second system 40, the cycle curve U40 from the second system 40 shows good or desired linear behavior. Therefore a complete measurement may be accomplished by taking good or desired results from the first system 30 and the second system 40 alternatively so that the dead zone problem can be avoided and a long range measurement can be implemented.

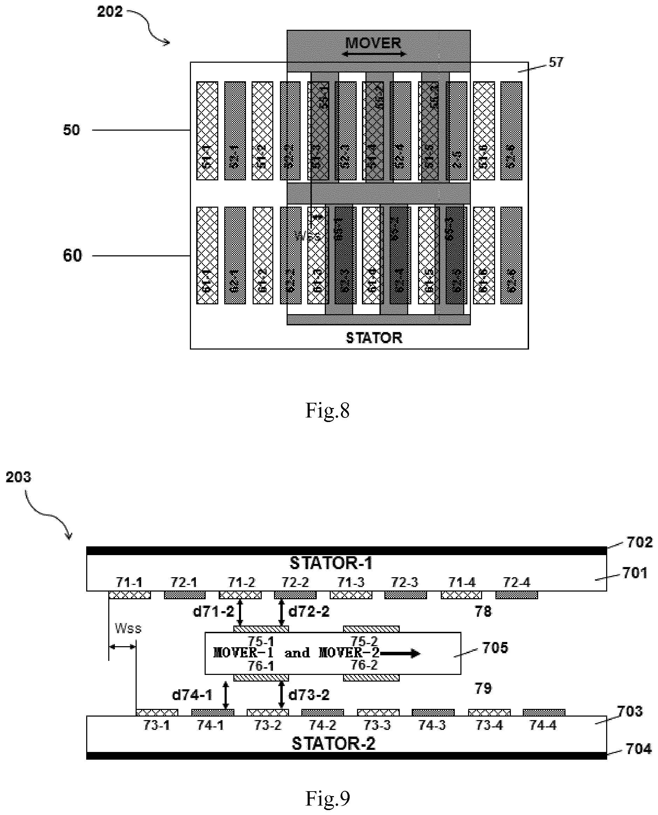

Fig. 8 shows a composite measurement system 202 according to another embodiment of the present invention. Unlike the composite measurement system 201, the Wss indicates the shifted distance of the ground electrode set 65 of the second system 60 with respect to the ground electrode set 55 of the first system 50, Wss = (Wc+Wcs)/2. Each capacitance electrode set of the first system 50 is aligned to each capacitance electrode set of the second system 60. The composite measurement system 202 can output two digital cyclic curves substantially similar to the ones in Fig. 7.

Fig.9 is side view of the capacitive sensor which is similar to Fig.6 and implements the curve of Fig.7. As shown, the sensor 203 includes two stationary components STATOR-1 and STATOR-2. The STATOR-1 includes: a first capacitance electrode set comprising electrodes 71-1, 71-2, 71-3 and 71-4 and a second capacitance electrode set comprising electrodes 72-1, 72-2, 72-3 and 72-4, and the electrodes of the first capacitance electrode set and the second capacitance electrode set are arranged alternatively at an equal distance from one another. The STATOR-2 includes a first capacitance electrode set comprising electrodes 73-1, 73-2, 73-3 and 73-4 and a second capacitance electrode set comprising electrodes 74-1, 74-2, 74-3 and 74-4, and the electrodes of these two capacitance electrode sets are arranged alternatively at an equal distance from one another. And the capacitance electrode set of the stationary component STATOR-1 is shifted by a distance of Wss with respect to the capacitance electrode set of the stationary component STATOR-2, further comprising a moving component MOVER with ground electrode sets on two sides (the ground electrode set formed by electrodes 75-1 and 75-2 and the ground electrode set formed by electrodes 76-1 and 76-2) (equivalent to two moving component MOVER), and the two sets of the ground electrode corresponds one to one.

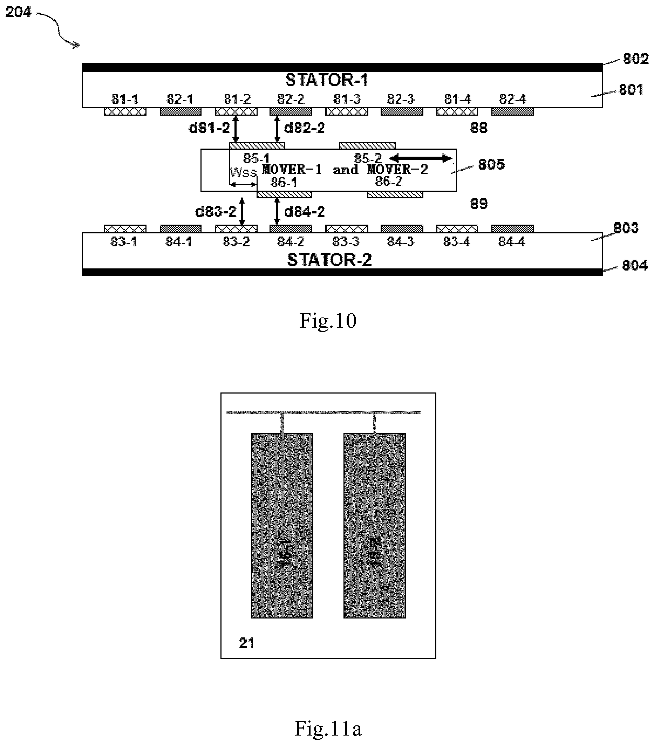

Fig.10 is side view of the capacitive sensor which is similar to Fig.8 and implements the curve of Fig.7, and also shows their geometric constructions. The capacitive displacement sensor 204 of Fig.10 is similar to the capacitive displacement sensor 203 of Fig.9 in construction, the difference is only in that, the capacitance electrode sets of STATOR-1 and STATOR-2 are aligned one to one, and the two sets of the ground electrode of the moving components MOVERs are shifted by a distance of Wss.

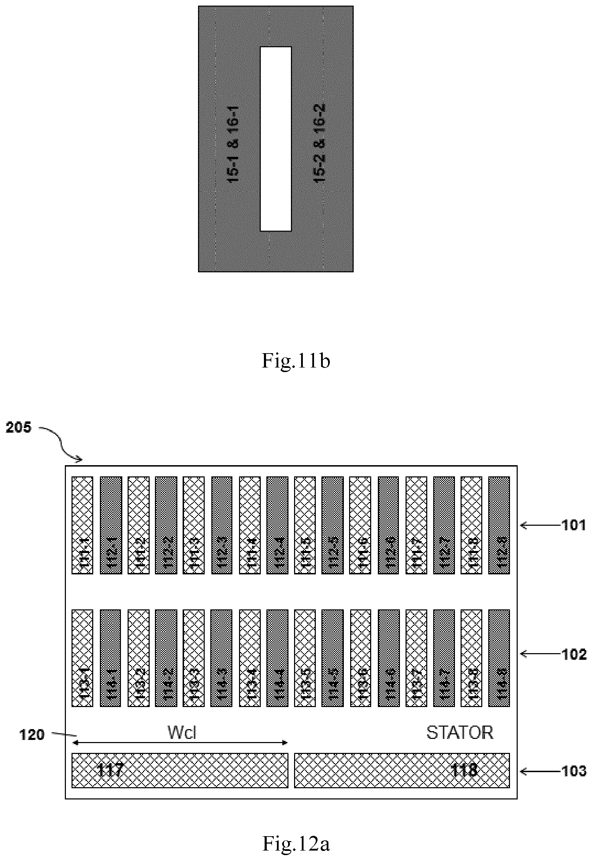

The moving component MOVER can be made simplify from a single conductive sheet of metals, for example, by a wire cutting technique, for example, making the moving component MOVER of capacitive sensor 100 in Fig.1, which is constructed by the first ground electrode 15 and the second electrode 16. In Fig.11a, the two electrodes 15-1 and 15-2 of the first ground electrode set 15 may be on the top side of an electrically-insulated substrate 21, and can be connected through wires to a ground terminal of a measurement system. Additionally it may be noted that there can exist two electrodes 16-1 and 16-2 of another ground electrodes set 16 that may be on the bottom side of the electrically-insulated substrate 21 (not shown).Such MOVER can be fabricated by a PCB technique for example. Fig. 11b shows the kind of MOVER that can be fabricated from a single conductive sheet of metal. The surfaces of the single electrode of the conductor can serve as multiple electrodes of the first ground electrode set 15 and second ground electrode set 16. Such an exemplary single sheet MOVER may be made very thin, very light and very small so it can make the measurement system have a faster dynamic response behavior; also, it may be useful for mini or micro devices if desired.

The above various composite measurement systems, respectively, can provide incremental measurements for a long range measurement. A measurement system may lose track of its position each time power is turned off. When power is turned on again the measurement system may need to find or define its home or zero position. Additionally measurement can be relative to a home position as a result of the cyclic nature of the measured signal.

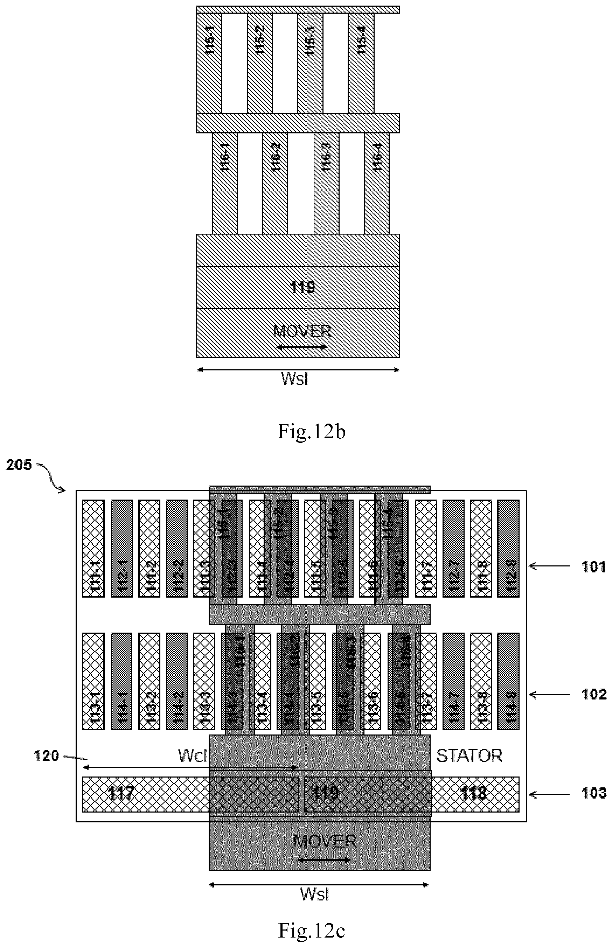

Fig. 12a to Fig.12c shows a composite measurement system 205 with coarse measurement function according to present invention. The system 205 includes three capacitive sensors, indicated by a first system 101, a second system 102 and a third system 103, respectively. The first system 101 and the second system 102 may be utilized for fine measurement. The third system 103 may be utilized for a coarse measurement. The three systems may be substantially similar to the composite measurement system 202 in construction, forming three capacitive measurement sensing systems.

Referring to Fig.12a to Fig.12c, The first system 101 includes a first capacitive electrode set 111 comprising electrodes 111-1, 111-2, ..., 111-m arranged at an equal distance from one another; a second capacitive electrode set 112 comprising electrodes 112-1, 112-2, ..., 112-m arranged at an equal distance from one another; and a first ground electrode set 115 comprising electrodes 115-1, 115-2, ..., 115-m arranged at an equal distance from one another. The first capacitive electrode set 111 and the second capacitive electrode set 112 are positioned on the same side of an electrically insulated substrate 120, forming a part of the stationary components STATORs. The first ground electrode set 115 can be fabricated from a single sheet of metal by wire cutting, or any other desired manner, and can form a part of the moving components MOVERs. When the moving components MOVERs displace in a substantially parallel manner with respect to the stationary STATORs, variable capacitors C111-1, C112-1...C111-m and C112-1, C112-2...C112-m are formed.

Based on the same principle, the second system 102 includes the capacitive electrode sets 113 and 114, wherein the second ground electrode set 116 is shifted a distance of Wss with respect to the first ground electrode set 115, Wss = (Wc+Wcs)/2. The first system 101 and the second system 102 can output digital cyclic curves substantially similar to those in Fig. 7.

The third system 103 only includes two capacitive electrodes 117, 118, and these two capacitive electrodes are positioned on the electrically-insulated substrate 120, forming a part of the stationary components STATORs. The ground electrode 119 may be fabricated together with the first ground electrode set 115 and the second ground electrode set 116 from a single sheet of metal by wire cutting, and can together form the moving components MOVERs. The relationship of the width Wcl of the two electrodes 117 and 118 and the width Wsl of the ground electrode 119 is designed as:

$$\text{Wcl} \leq \text{Wc} * \text{m} + \text{Wcs} * (\text{m-1}) \qquad \text{[equation 5]}$$

$$\text{Wsl} \quad \leq (\text{Wc} + \text{Wcs}) * \text{m} \qquad \text{[equation 6]}$$

where Wc is the width of the electrodes of the first capacitance electrode set and Wcs is the space between electrodes of the adjacent capacitance electrode sets. The third system 103 provides a unidirectional incremental linear curve.

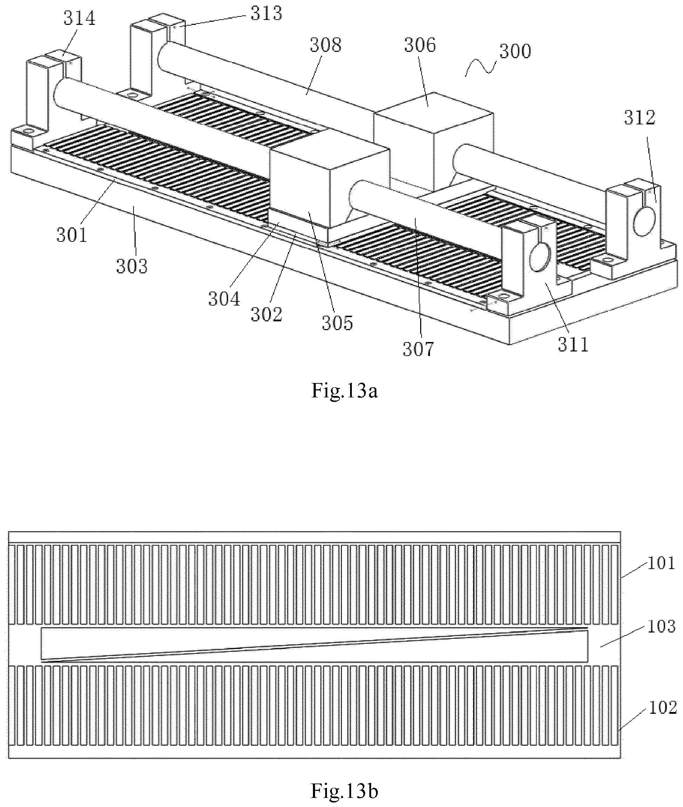

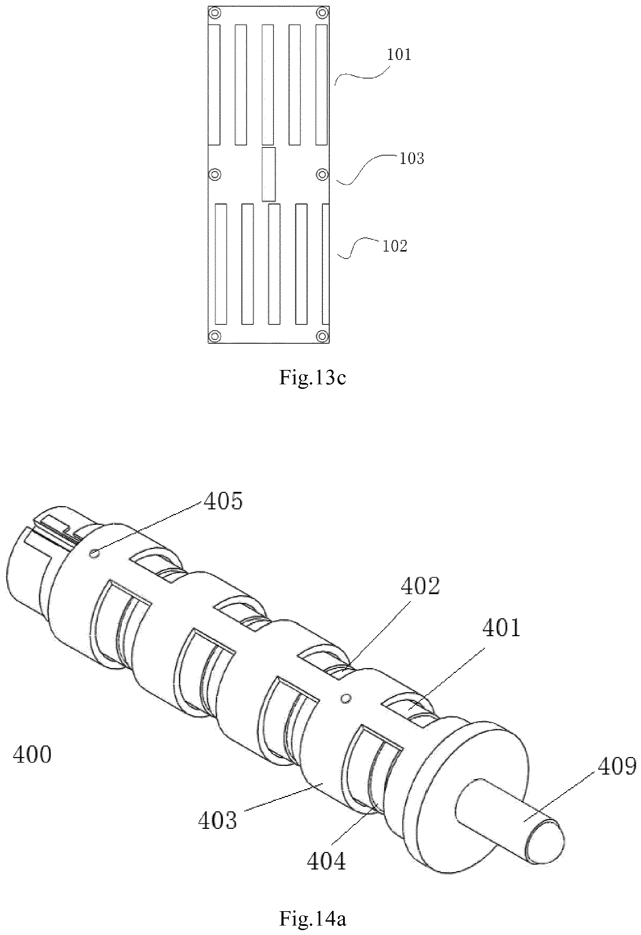

Fig. 13a demonstrates how a combined capacitive sensing system 300 for an absolute linear displacement measurement is assembled. The stationary component STATOR 301 and the moving component MOVER 302 form multiple variable capacitors during a movement, the measurement sensing system 300 consists of a STATOR base 303, a MOVER base 304, four corners of the STATOR base 303 are fixed on four guider supports 311, 312, 313, and 314 respectively, the two ends of a motion guider 307 are fixed on the guider supports 311,314 respectively, and the two ends of a motion guider 308 are fixed on the guider supports 312,313 respectively. The motion guiders 307, 308 slide respectively, with bearings 305 and 306, and the lower part of these two bearings is fixed on the MOVER base 304. Such structure enables the MOVER base 304 move a liner manner, driven by the bearings 305 and 306, along the motion guiders 307,308 relative to the STATOR base 303, wherein the stationary component 301 in the the STATOR base 303 includes the ground electrode sets of the first system, the second system and the third system.

Fig13b shows the top view and the side view of combined capacitive sensing system 300 for an absolute linear displacement measurement of Fig.13a. Each system is constructed with two capacitance electrodes sets and one ground electrode set, for the third system of the coarse measurement, each capacitance electrode set is configured with one electrode, as an example, the electrode for coarse measurement is of triangle shape.

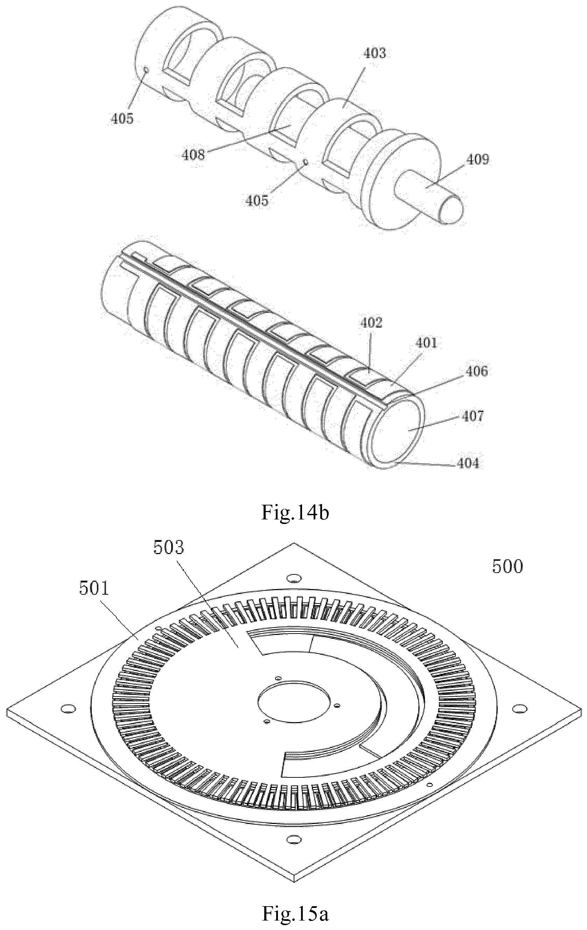

Fig. 14a and Fig. 14b show another embodiment of a combined capacitive sensing system 400 for an absolute linear displacement measurement. In this structure, the electrodes of the first capacitance electrode set 401, the second capacitance electrode set 402 and ground electrode set 403 are of cylindrical shape. The first capacitance electrode set 401 and the second capacitance electrode set 402 are fixed on the circumferential surface of an electrically cylindrical insulated substrate 404, forming the stationary component STATOR of the system, for example, with a flexible PCB glued to the circumferential surface of the electrically insulated substrate 404. The ground electrode set 403 may be fabricated from a single conductive tube of metal with a wire cutting method, appearing as cylindrical shape, a slider 409 is attached to the outer side of the ground electrode set 403, a shaft 408 which is coaxial with the slider 409 is fixed on the inner cavity of the ground electrode set 403, and an inner cavity 407 is also provided for the electrically cylindrical insulated substrate 404, in case of acting in coordination, the electrically insulated substrate 404 is inserted in the inner cavity of the ground electrode set 403, and at the same time, the shaft 408 is inserted in the inner cavity of the electrically insulated substrate 404 and slides to fit together. In this way, the electrically cylindrical insulated substrate 404 can move in a liner manner along with the ground electrode set 403, in order to prevent the mutual rotation between the electrically cylindrical insulated substrate 404 and the ground electrode set 403, a groove 406 may be set on the surface of the electrically cylindrical insulated substrate 404 along its axial direction, coordinating with pins 405 which are set downward in inner side of the ground electrode set 403.

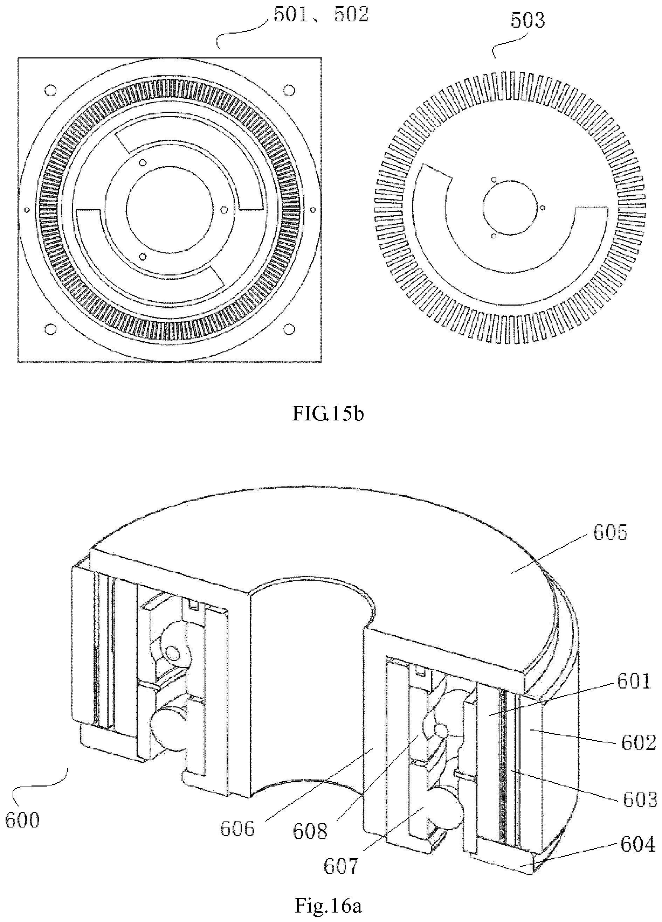

The above described principles can also be applied to measure an angular displacement. Referring to Fig 15a, Fig.15b and Fig.15c, a combined capacitive sensing system 500 for an absolute displacement measurement is provided, applicable for a full 360-degree measurement range, comprising a first stationary component STATOR501, a second stationary component STATOR502 and a moving component MOVER503. The electrodes of the first stationary component STATOR501 and the second stationary component STATOR502 are flat sectorial sectional shape and distributed alternatively on one cyclic substrate, similarly, the electrodes of the moving component MOVER503 is also distributed alternatively at an equal distance on one cyclic substrate. And the substrates of the moving component MOVER503 and the stationary component STATOR are concentric. When the moving component MOVER 503 rotates, the electrodes of the moving component MOVER 503 and the electrodes of the first stationary component STATOR 501 and the second stationary component STATOR 502 form multiple variable capacitors. It is conceivable for one skilled in the art that substrate base of the stationary component STATOR can be made as semi-circular shape or quarter-circular shape without paying any creative work. It can also set two fan-shaped electrodes on the circumferential substrate of the stationary component STATOR, cooperating with the moving component MOVER for coarse measurement. In this embodiment, the variation of the overlapped area between electrodes are not rectangular, the formulas in above embodiments are still met, where Wc and Wg are the angular widths of the electrodes of the stationary component STATOR and the moving component MOVER respectively, and Wcs and Wgs are the angular spaces between adjacent electrodes of the stationary component STATOR and the moving component MOVER, Wss is staggered angle of these components. Lc denotes the rotation radius of electrodes of the stationary component STATOR, Lg denotes the rotation radius of the ground electrodes of the moving component MOVER. If the electrodes are formed with a flat sectorial section of planar structure or a cylindrical rectangular section of cylindrical surface, Wc is between 0.001° and 180°, Wcs is between 0.001° and 270°, Lc is between 0.1mm and 200mm.

Fig. 16a shows a combined capacitive sensing system 600 for an absolute angular displacement measurement according to another embodiment, comprising cylindrically shaped a first stationary component STATOR 601, a second stationary component STATOR 602, and a stationary component STATOR 603, a STATOR base 604, a MOVER base 605, two bearings 607 and 608, and a bearing holder 606. The MOVER 603 fixed on the MOVER base 605 can rotate with respect to the STATOR 601 and STATOR 602 through the bearings 607 and 608.

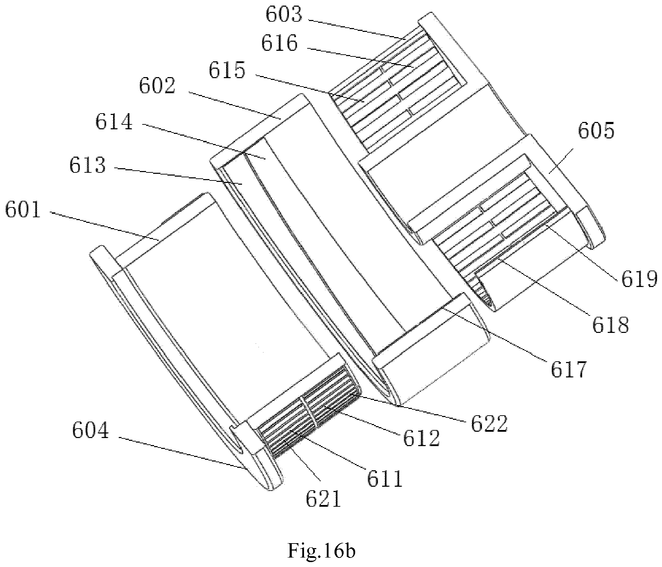

Fig. 16b shows the internal structure of the measurement sensing system 600. The first stationary component STATOR 601 comprises four capacitance electrodes set 611, 621, 612, and 622, each capacitance electrodes set comprises forty-five electrodes, wherein the electrodes of the capacitance electrodes sets 611 and 621 are distributed alternatively on the circumferential upper half surface of the STATOR base at an equal distance from each other, and the electrodes of the capacitance electrodes sets 612 and 622 are distributed alternatively on the circumferential bottom half surface of the STATOR base at an equal distance from each other. The electrodes have a cylindrical rectangular section of cylindrical surface. And the second stationary component STATOR 602 also has a cylindrical electrically insulating substrate, which has three lager electrodes 613,614 and 617, wherein electrodes 613 and 614 are with a cylindrical triangular section of cylindrical surface, and 617 is with a cylindrical rectangular section.

The MOVER 603 can include an electrically cylindrical insulated substrate, two ground electrodes sets 615 and 616, and each set has forty-five electrodes, these two ground electrodes sets is set on the inner side of the electrically insulated substrate, and two ground electrodes sets 618 and 619 are set on the outer side. Upon assembly, the capacitance electrode set 611 and the ground electrode set 615 form a capacitive set C611, the capacitance electrode set 621 and the ground electrode set 615 form a capacitive set C621, the capacitance electrode set 612 and the ground electrode set 616 form a capacitive set C612, the capacitance electrode set 622 and the ground electrode set 616 form a capacitive set C622, the capacitance electrode 613 and the ground electrode 618 form capacitor C613, the capacitance electrode 614 and the ground electrode 618 form capacitor C614, and the capacitance electrode 617 and the ground electrode 619 form capacitor C617.

Differential compensations can be formed between the capacitive set C611 and the capacitive set C621, and between the capacitive set C612 and the capacitive set C622 for fine measurements, and between the capacitor C613 and the capacitor C614 for a coarse measurement. The function of the capacitor C617 may be to define the position of zero degree.

The stationary component STATOR and the moving component MOVER are manufactured from a printed circuit board (PCB) method, a various thin-film deposition method, or a printed electronics method, these methods belong to prior arts and will not be detailed here.

The foregoing description and accompanying figures illustrate the preferred embodiments and modes of operation of the invention. However, the invention should not be construed as being limited to the particular embodiments discussed above. Additional variations of the embodiments discussed above will be appreciated by those skilled in the art.

Similar numbers refer to like elements throughout. For clarity, in the drawings may have certain lines, layers, elements, components or features magnification.

## Claims

1. A capacitive sensor (100, 203, 204) **characterized by** comprising: at least two stationary components STATORs (104, 105, 501, 502, 601, 602, 603), wherein each of the stationary components STATORs (104, 105, 501, 502, 601, 602, 603) includes:

   an electrically insulated substrate (17; 19; 21; 37; 120; 404), a first capacitance electrode set (11; 13; 401) comprising **m** conductive electrodes (11-1, 11-2,...11-n,...11-m; 13-1,13-2,... 13-n,...13-m, where n≤m) connected electrically and a second capacitance electrode set (12; 14; 402) comprising **m** conductive electrodes (12-1, 12-2,...12-n,...12-m; 14-1,14-2,... 14-n,...14-m, where n≤m) connected electrically on the electrically insulated substrate (17; 19; 21; 37; 120; 404), wherein the electrodes of the first capacitance electrode set (11; 13; 401) and the second capacitance electrode set (12; 14; 402) are same in number and in shape, and are arranged alternatively at an equal distance from one another on the electrically insulated substrate (17; 19; 21; 37; 120; 404);
   at least two moving components MOVERs (106; 503) that can move relatively to the stationary components STATORs (104; 105; 501; 502; 601; 602; 603) in a linear or rotational manner, wherein the moving components MOVERs (106; 503) and the stationary components STATORs (104; 105; 501; 502; 601; 602; 603) are same in number, each of the moving components MOVERs (106; 503) comprising:

   an electrically insulated substrate (17; 19; 21; 37; 120; 404), a ground electrode set (15; 16; 35; 55; 65; 115; 116; 403;615; 616; 618; 619) comprising n ground electrodes (15-1, 15-2, ...15-n; or 16-1, 16-2, ...16-n) connected electrically , wherein the ground electrodes are same in number and arranged at an equal distance from one another on the electrically insulated substrate (17; 19; 21; 37; 120; 404); where **n** is less than or equal to **m**;
   wherein, the width of each ground electrode of the moving components MOVERs (106; 503) in the movement direction is set so that, in the process of movement or rotation , each ground electrode form two variable capacitors with one capacitance electrode of the first capacitance electrode set (11; 13; 401) and one capacitance electrode of the second capacitance electrode set (12; 14; 402), respectively, thereby the ground electrode set (15; 16; 35; 55; 65; 115; 116; 403; 615; 616; 618; 619) of the moving components MOVERs (106; 503) together with the first capacitance electrode set (11; 13; 401) and the second capacitance electrode set (12; 14; 402) of the stationary components STATORs (104; 105; 501; 502; 601; 602; 603) forms two variable capacitance sets;

the capacitive sensor (100; 203; 204) comprises at least two stationary components STATORs (104; 105; 501; 502; 601; 602; 603) or at least two moving component MOVERs (106; 503), wherein the electrodes of different stationary components STATORs (104; 105; 501; 502; 601; 602; 603) or the electrodes of different moving components MOVERs (106; 503) offset a distance Wss in moving direction of the moving component MOVER (106; 503), in order to make the transition locations of cycle curves offset mutually, wherein, the cycle curves are outputted by systems constituted by offset components respectively, and Wss= (Wc+Wcs)/2, where Wc is the widths or angular widths of the electrode of the stationary components STATORs (104; 105; 501; 502; 601; 602; 603), Wcs denotes the spaces or angular spaces between adjacent electrodes of the stationary components STATORs (104; 105; 501; 502; 601; 602; 603).

2. The capacitive sensor (100; 203; 204) according to claim 1, **characterized in that** the corresponding electrodes of different stationary components STATORs (104; 105; 501; 502; 601; 602; 603) are aligned one to one, the corresponding electrodes of different moving components MOVERs (106; 503) are aligned one to one, and one pair of the aligned electrodes from different stationary components STATORs (104; 105; 501; 502; 601; 602; 603) and one ground electrode form a pair of two variable capacitors .

3. The capacitive sensor (100; 203; 204) according to claim 1, **characterized in that** one pair of adjacent electrodes which are on the same stationary component STATOR (104; 105; 501; 502; 601; 602; 603) and respectively from the first capacitance electrode set (11; 13; 401) and the second capacitance electrode set (12; 14; 402) and the corresponding ground electrode form a pair of two variable capacitors.

4. The capacitive sensor (100; 203; 204) according to any of claim 1 to claim 3, **characterized in that** the electrodes are planar structures formed with a flat rectangular section or a flat sectorial section or a flat triangular or a flat sectorial triangular section of planar structure, or are formed with a cylindrical rectangular section, a cylindrical triangular section of cylindrical surface.

5. The capacitive sensor (100; 203; 204) according to claim 4, **characterized in that** (Wg+Wgs)=2*(Wc+Wcs), Wcs≤Wc and Wc≤Wg≤(Wc+2*Wcs), where Wc and Wg are the width or angular width of the electrode of the stationary component STATOR (104; 105; 501; 502; 601; 602; 603) and the moving component MOVER (106; 503) respectively, and Wcs and Wgs are the spaces or angular spaces between adjacent electrodes of the stationary component STATOR (104; 105; 501; 502; 601; 602; 603) and the moving component MOVER (106; 503).

6. The capacitive sensor (100; 203; 204) according to claim 4, **characterized in that**, if the electrodes are formed with a flat rectangular section of planar structure, Wc is between 0.001mm and 200mm, Wcs is between 0.001mm and 200mm, and Lc is between 0.005mm and 200mm, where Wc denotes the width of the electrodes of the stationary component STATOR (104; 105; 501; 502; 601; 602; 603), Wcs denotes the spaces between adjacent electrodes of the stationary component STATOR (104; 105; 501; 502; 601; 602; 603) and Lc denotes the length of the electrodes of the stationary component STATOR (104; 105; 501; 502; 601; 602; 603).

7. The capacitive sensor (100; 203; 204) according to claim 4, **characterized in that** if the electrodes are formed with a flat sectorial section of planar structure or a cylindrical rectangular section of cylindrical surface, Wc is between 0.001° and 180°, Wcs is between 0.001° and 270°, Lc is between 0.1mm and 200mm, where the Wc denotes the width of the electrodes of the stationary component STATOR (104; 105; 501; 502; 601; 602; 603), Wcs denotes the angular spaces between adjacent electrodes of the stationary component STATOR (104; 105; 501; 502; 601; 602; 603) and Lc denotes the rotation radius of electrodes of the stationary component STATOR (104; 105; 501; 502; 601; 602; 603).

8. The capacitive sensor (100; 203; 204) according to claim 4, **characterized in that** Lc≠ Lg , Lc denotes the rotation radius of the electrodes of the stationary component STATOR (104; 105; 501; 502; 601; 602; 603), and Lg denotes the rotation radius of the ground electrodes of the moving component STATOR (104; 105; 501; 502; 601; 602; 603).

9. The capacitive sensor (100; 203; 204) according to claim 1, **characterized in that**, further comprising a stationary component STATOR (104; 105; 501; 502; 601; 602; 603) and a moving component MOVER (106; 503) for the purpose of coarse measurement, wherein the stationary component STATOR (104; 105; 501; 502; 601; 602; 603) consists of two electrodes, the width or the angular width of the two electrodes is denoted by Wcl, and the moving component MOVER (106; 503) consists of a ground electrode, the width or the angular width of the ground electrode is denoted by Wsl, wherein Wcl ≤ Wc * m + Wcs * (m-1) and Wsl ≤ (Wc + Wcs) * m.

10. The capacitive sensor (100; 203; 204) according to any of claim 1 to claim 3, **characterized in that** the electrically insulated substrate (17; 19; 21; 37; 120; 404) of the stationary component STATOR (104; 105; 501; 502; 601; 602; 603) is configured with an electrical shielding layer.

11. The capacitive sensor (100; 203; 204) according to claim 1, **characterized in that**, the stationary component STATOR (104; 105; 501; 502; 601; 602; 603) and the moving component MOVER (106; 503) are manufactured from a printed circuit board (PCB) method, a various thin-film deposition method, or a printed electronics method.

12. The capacitive sensor (100; 203; 204) according to claim 1, **characterized in that**, the moving components MOVERs (106; 503) are manufactured from a metal thin sheet or thin tube, and the two surfaces of the metal thin sheet or thin tube service as ground electrodes to form more variable capacitance set with more stationary components STATORs (104; 105; 501; 502; 601; 602; 603).

13. A combined capacitive displacement measurement sensing system (201; 202; 205; 300; 400; 500; 600), **characterized by** comprising the capacitive sensor (100; 203; 204) of any of claim 1 to claim 12, further comprising: a signal processing system for measuring electronic signals of the first capacitance electrode set (11; 13; 401) and the second capacitance electrode set (12; 14; 402) on the STATORs (104; 105; 501; 502; 601; 602; 603) to obtain displacement data, wherein the ground of the signal processing system is connected with the ground of the electrode set on the MOVERs (106; 503).

**Patentansprüche**

1. Kapazitiver Sensor (100, 203, 204),
   **dadurch gekennzeichnet, dass** er umfasst:
   mindestens zwei stationäre Komponenten STATORs (104, 105, 501, 502, 601, 602, 603), wobei jede der stationären Komponenten STATORs (104, 105, 501, 502, 601, 602, 603) umfasst:
   Ein elektrisch isoliertes Substrat (17; 19; 21; 37; 120; 404), einen ersten kapazitiven Elektrodensatz (11; 13; 401) mit m elektrisch verbundenen leitenden Elektroden (11-1, 11-2, ... 11-n, ... 11-m, 13-1, 13-2, ... 13-n, ... 13-m, wobei $n \leq m$) und einen zweiten kapazitiven Elektrodensatz (12; 14; 402) mit m elektrisch auf dem elektrisch isolierten Substrat (17; 19; 21; 37; 120; 404) verbundenen leitenden Elektroden (12-1, 12-2, ... 12-n, ... 12-m; 14-1, 14-2, ... 14-n, ... 14-m, wobei $n \leq m$), wobei die Elektroden des ersten kapazitiven Elektrodensatzes (11; 13; 401) und des zweiten kapazitiven Elektrodensatzes (12; 14; 402) in Anzahl und Form gleich sind und alternativ in gleichem Abstand zueinander auf dem elektrisch isolierten Substrat (17; 19; 21; 37; 120; 404) angeordnet sind; mindestens zwei bewegliche Komponenten MOVERs (106; 503), die sich relativ zu den stationären Komponenten STATORs (104; 105; 501; 502; 601; 602; 603) linear oder rotierend bewegen können, wobei die beweglichen Komponenten MOVERs (106; 503) und die stationären Komponenten STATORs (104; 105; 501; 502; 601; 602; 603) in ihrer Anzahl gleich sind, wobei jede der beweglichen Komponenten MOVERs (106; 503) Folgendes umfasst:

   Ein elektrisch isoliertes Substrat (17; 19; 21; 37; 120; 404), einen Masseelektrodensatz (15; 16; 35; 55; 65; 115; 116; 403; 615; 616; 618; 619) mit n elektrisch verbundenen Masseelektroden (15-1, 15-2, ... 15-n, oder 16-1, 16-2, ... 16-n), wobei die Masseelektroden in gleicher Anzahl und in gleichem Abstand zueinander auf dem elektrisch isolierten Substrat (17; 19; 21; 37; 120; 404) angeordnet sind; wobei n kleiner oder gleich m ist; wobei die Breite jeder Masseelektrode der beweglichen Teile MOVERs (106; 503) in Bewegungsrichtung so eingestellt ist, dass jede Masseelektrode bei der Bewegung oder Drehung zwei variable Kapazitäten mit einer Kapazitätselektrode des ersten Kapazitätselektrodensatzes (11; 13; 401) bildet bzw. eine Kapazitätselektrode des zweiten Kapazitätselektrodensatzes (12; 14; 402), wobei der Masseelektrodensatz (15; 16; 35; 55; 65: 115; 116; 403; 615; 616; 618; 619) der beweglichen Bauteile MOVERs (106; 503) zusammen mit dem ersten Kapazitätselektrodensatz (11; 13; 401) und dem zweiten Kapazitätselektrodensatz (12; 14; 402) der stationären Bauteile STATORs (104; 105; 501; 502; 601; 602; 603) zwei variable Kapazitätssätze bildet; der kapazitive Sensor (100; 203; 204) mindestens zwei stationäre Komponenten STATORs (104; 105; 501; 502; 601; 602; 603) oder mindestens zwei bewegliche Komponenten MOVERs (106; 503) umfasst, wobei die Elektroden verschiedener stationärer Komponenten STATORs (104; 105; 501; 502; 601; 602; 603) oder die Elektroden verschiedener beweglicher Komponenten MOVERs (106; 503) einen Abstand Wss in Bewegungsrichtung der beweglichen Komponente MOVER (106; 503) versetzten, um die Übergangsstellen von Zykluskurven gegeneinander auszurichten, wobei die Zykluskurven von Systemen ausgegeben werden, die jeweils aus versetzten Komponenten bestehen und Wss=(Wc+Wcs)/2, wobei Wc die Breiten oder Winkelbreiten der Elektrode der stationären Komponenten STATORs (104; 105; 501; 502; 601; 602; 603) ist und Wcs die Räume oder Winkelräume zwischen benachbarten Elektroden der stationären Komponenten STATORs (104; 105; 501; 502; 601; 602; 603) bezeichnet.

2. Der kapazitive Sensor (100; 203; 204) nach Anspruch 1,
**dadurch gekennzeichnet, dass**
die entsprechenden Elektroden verschiedener stationärer Komponenten STATORs (104; 105; 501; 502; 601; 602; 603) eins zu eins ausgerichtet sind, die entsprechenden Elektroden verschiedener beweglicher Komponenten MOVERs (106; 503) eins zu eins ausgerichtet sind, und ein Paar der ausgerichteten Elektroden verschiedener stationärer Komponenten STATORs (104; 105; 501; 502; 601; 602; 603) und eine Masseelektrode ein Paar von zwei variablen Kapazitäten bilden.

3. Der kapazitive Sensor (100; 203; 204) nach Anspruch 1,
**dadurch gekennzeichnet, dass**
ein Paar benachbarter Elektroden, die sich auf derselben stationären Komponente STATOR (104; 105; 501; 502; 601; 602; 603) befinden bzw. den ersten kapazitiven Elektrodensatz (11; 13; 401) bilden und der zweite kapazitive Elektrodensatz (12; 14; 402) und die entsprechende Masseelektrode ein Paar von zwei variablen Kapazitäten bilden.

4. Der kapazitive Sensor (100; 203; 204) nach einem der Ansprüche 1 bis 3,
**dadurch gekennzeichnet, dass**
die Elektroden planare Strukturen sind, die mit einem flachen rechteckigen Abschnitt oder einem flachen sektoriellen Abschnitt oder einem flachen dreieckigen oder einem flachen sektoriellen dreieckigen Abschnitt einer planaren Struktur oder einem zylindrischen rechteckigen Abschnitt, einem zylindrischen dreieckigen Abschnitt einer zylindrischen Oberfläche ausgebildet sind.

5. Der kapazitive Sensor (100; 203; 204) nach Anspruch 4,
**dadurch gekennzeichnet, dass** (Wg+Wgs)=2*(Wc+Wcs), Wcs≤Wc und Wc≤Wg≤(Wc+2*Wcs), wobei Wc und Wg die Breite bzw. die Winkelbreite der Elektrode der stationären Komponente STATOR (104; 105; 501; 502; 601; 602; 603) bzw. der beweglichen Komponente MOVER (106; 503) sind, und Wcs und Wgs die Abstände oder Winkelabstände zwischen benachbarten Elektroden der stationären Komponente STATOR (104; 105; 501; 502; 601; 602; 603) und der beweglichen Komponente MOVER (106; 503).

6. Der kapazitive Sensor (100; 203; 204) nach Anspruch 4,
**dadurch gekennzeichnet, dass**,
wenn die Elektroden mit einem flachen rechteckigen Querschnitt von planarer Struktur ausgebildet sind, Wc zwischen 0,001 mm und 200 mm, Wcs zwischen 0,001 mm und 200 mm und Lc zwischen 0,005 mm und 200 mm liegt, wobei Wc die Breite der Elektroden der stationären Komponente STATOR (104; 105; 501; 502; 601; 602; 603), Wcs die Abstände zwischen benachbarten Elektroden der stationären Komponente STATOR (104; 105; 501; 502; 601; 602; 603) und Lc die Länge der Elektroden der stationären Komponente STATOR (104; 105; 501; 502; 601; 602; 603) bezeichnet.

7. Der kapazitive Sensor (100; 203; 204) nach Anspruch 4,
**dadurch gekennzeichnet, dass**,
wenn die Elektroden mit einem flachen Sektorenabschnitt mit planarer Struktur oder einem zylindrischen Rechteckabschnitt mit zylindrischer Oberfläche ausgebildet sind, Wc zwischen 0,001° und 180° liegt, Wcs zwischen 0,001° und 270° liegt, Lc zwischen 0,1 mm und 200 mm liegt, wobei Wc die Breite der Elektroden der stationären Komponente STATOR (104; 105; 501; 502; 601; 602; 603), Wcs die Winkelabstände zwischen benachbarten Elektroden der stationären Komponente STATOR (104; 105; 501; 502; 601; 602; 603) und Lc den Drehradius der Elektroden der stationären Komponente STATOR (104; 105; 501; 502; 601; 602; 603) bezeichnet.

8. Der kapazitive Sensor (100; 203; 204) nach Anspruch 4,
**dadurch gekennzeichnet, dass**
Lc ≠ Lg, dass Lc den Rotationsradius der Elektroden der stationären Komponente STATOR (104; 105; 501; 502; 601; 602; 603) bezeichnet, und dass Lg den Rotationsradius der Masseelektroden der beweglichen Komponente STATOR (104; 105; 501; 502; 601; 602; 603) bezeichnet.

9. Der kapazitive Sensor (100; 203; 204) nach Anspruch 1,
**dadurch gekennzeichnet, dass**
ferner eine stationäre Komponente STATOR (104; 105; 501; 502; 601: 602; 603) und eine bewegliche Komponente MOVER (106; 503) zum Zwecke der Grobmessung vorhanden sind, wobei die stationäre Komponente STATOR (104; 105; 501; 502; 601; 602; 603) aus zwei Elektroden besteht, die Breite oder die Winkelbreite der beiden Elektroden durch Wcl bezeichnet ist, und die bewegliche Komponente MOVER (106; 503) aus einer Masseelektrode besteht, wobei die Breite oder die Winkelbreite der Masseelektrode durch Wsl bezeichnet ist, wobei Wcl ≤ Wc*m + Wcs*(m-1) und Wsl ≤ (Wc + Wcs)*m.

10. Der kapazitive Sensor (100; 203; 204) nach einem der Ansprüche 1 bis 3,
**dadurch gekennzeichnet, dass**
das elektrisch isolierte Substrat (17; 19; 21; 37; 120; 404) der stationären Komponente STATOR (104; 105; 501; 502; 601; 602; 603) mit einer elektrischen Abschirmschicht ausgebildet ist.

11. Der kapazitive Sensor (100; 203; 204) nach Anspruch 1,
**dadurch gekennzeichnet, dass**
die stationäre Komponente STATOR (104; 105; 501; 502; 601; 602; 603) und die bewegliche Komponente MOVER (106; 503) aus einem Leiterplattenverfahren (PCB), einem verschiedenen Dünnschichtabscheideverfahren oder einem gedruckten Elektronikverfahren hergestellt werden.

12. Der kapazitive Sensor (100; 203; 204) nach Anspruch 1,
**dadurch gekennzeichnet, dass**
die beweglichen Komponenten MOVERs (106; 503) aus einem dünnen Metallblech oder einem dünnen Rohr hergestellt werden und zwei Oberflächen des dünnen Metallblechs oder des dünnen Rohrs als Masseelektroden dienen, um mehr variable Kapazitäten mit mehr stationären Komponenten STATORs (104; 105; 501; 502; 601; 602; 603) zu bilden.

13. Ein kombiniertes kapazitives Dislokationsmesssystem (201; 202; 205; 300; 400; 500; 600),
**dadurch gekennzeichnet, dass**
es den kapazitiven Sensor (100; 203; 204) eines der Ansprüche 1 bis 12 umfasst und ferner umfasst:
Ein Signalverarbeitungssystem zum Messen elektronischer Signale des ersten kapazitiven Elektrodensatzes (11; 13; 401) und des zweiten kapazitiven Elektrodensatzes (12; 14; 402) an den STATORs (104; 105; 501; 502; 601; 602; 603), um Dislokationsdaten zu erhalten, wobei die Masse des Signalverarbeitungssystem mit der Masse des Elektrodensatzes an den MOVERs (106; 503) verbunden ist.

## Revendications

1. Capteur capacitif (100, 203, 204),
**caractérisé en ce qu'**il comprend :
au moins deux composants stationnaires STATOR (104 ; 105 ; 501 ; 502 ; 601 ; 602 ; 603), dans lequel chacun des composants stationnaires STATOR (104 ; 105 ; 501 ; 502 ; 601 ; 602 ; 603) comprend :

un substrat électriquement isolé (17 ; 19 ; 21 ; 37 ; 120 ; 404), un premier groupe d'électrodes de capacitance (11 ; 13 ; 401) comprenant **m** électrodes conductrices (11-1, 11-2, ..., 11-n, ..., 11-m ; 13-1, 13-2, ..., 13-n, ..., 13-m, où n ≤ m) reliées électriquement et un second groupe d'électrodes de capacitance (12 ; 14 ; 402) comprenant **m** électrodes conductrices (12-1, 12-2, ..., 12-n, ..., 12-m ; 14-1, 14-2, ..., 14-n, ..., 14-m, où n ≤ m) reliées électriquement sur le substrat électriquement isolé (17 ; 19 ; 21 ; 37 ; 120 ; 404), dans lequel les électrodes du premier groupe d'électrodes de capacitance (11 ; 13 ; 401) et du second groupe d'électrodes de capacitance (12 ; 14 ; 402) présentent le même nombre et la même forme, et sont disposées en alternance à une distance identique les unes des autres sur le substrat électriquement isolé (17 ; 19 ; 21 ; 37 ; 120 ; 404) ;
au moins deux composants mobiles MOVER (106 ; 503) qui peuvent se déplacer par rapport aux composants stationnaires STATOR (104 ; 105 ; 501 ; 502 ; 601 ; 602 ; 603) de manière linéaire ou rotationnelle, dans lequel les composants mobiles MOVER (106 ; 503) et les composants stationnaires STATOR (104 ; 105 ; 501 ; 502 ; 601 ; 602 ; 603) présentent le même nombre, chacun des composants mobiles MOVER (106 ; 503) comprenant :

un substrat électriquement isolé (17 ; 19 ; 21 ; 37 ; 120 ; 404), un groupe d'électrodes de masse (15 ; 16 ; 35 ; 55 ; 65 ; 115 ; 116 ; 403 ; 615 ; 616 ; 618 ; 619) comprenant **n** électrodes de masse (15-1, 15-2, ..., 15-n ; ou 16-1, 16-2, ..., 16-n) reliées électriquement, dans lequel les électrodes de masse présentent le même nombre et sont disposées à une distance identique les unes des autres sur le substrat électriquement isolé (17 ; 19 ; 21 ; 37 ; 120 ; 404) ; où **n** est inférieur ou égal à **m** ;

dans lequel la largeur de chaque électrode de masse des composants mobiles MOVER (106 ; 503) dans la direction de mouvement est définie de sorte que, au cours du processus de mouvement ou de rotation, chaque électrode de masse forme deux condensateurs variables avec une électrode de capacitance du premier groupe d'électrodes de capacitance (11 ; 13 ; 401) et une électrode de capacitance du second groupe d'électrodes de capacitance (12 ; 14 ; 402), respectivement, et, ainsi, le groupe d'électrodes de masse (15 ; 16 ; 35 ; 55 ; 65 ; 115 ; 116 ; 403 ; 615 ; 616 ; 618 ; 619) des composants mobiles MOVER (106 ; 503), avec le premier groupe d'électrodes de capacitance (11 ; 13 ; 401) et le second groupe d'électrodes de capacitance (12 ; 14 ; 402) des composants stationnaires STATOR (104 ; 105 ; 501 ; 502 ; 601 ; 602 ; 603), forme deux groupes à capacitance variable ;

le capteur capacitif (100; 203; 204) comprend au moins deux composants stationnaires STATOR (104 ; 105 ; 501 ; 502 ; 601 ; 602 ; 603) ou au moins deux composants mobiles MOVER (106 ; 503), dans lequel les électrodes des différents composants stationnaires STATOR (104 ; 105 ; 501 ; 502 ; 601 ; 602 ; 603) ou les électrodes des différents composants mobiles MOVER (106 ; 503) décalent une distance Wss dans la direction de mouvement du composant mobile MOVER (106 ; 503) afin que les emplacements de transition des courbes de cycles se décalent mutuellement, dans lequel les courbes de cycles sont fournies par des systèmes constitués de composants de décalage respectivement, et Wss = (Wc+Wcs)/2, où Wc correspond aux largeurs ou aux largeurs angulaires de l'électrode des composants stationnaires STATOR (104; 105; 501 ; 502; 601 ; 602; 603), Wcs indique les espaces ou les espaces angulaires entre les électrodes adjacentes des composants stationnaires STATOR (104 ; 105 ; 501 ; 502 ; 601 ; 602 ; 603).

2.  Capteur capacitif (100 ; 203 ; 204) selon la revendication 1,
    **caractérisé en ce que**
    les électrodes correspondantes des différents composants stationnaires STATOR (104 ; 105 ; 501 ; 502 ; 601 ; 602 ; 603) sont alignées les unes avec les autres, les électrodes correspondantes des différents composants mobiles MOVER (106 ; 503) sont alignées les unes avec les autres, et une paire d'électrodes alignées provenant des différents composants stationnaires STATOR (104 ; 105 ; 501 ; 502 ; 601 ; 602 ; 603) et une électrode de masse forment une paire de deux condensateurs variables.

3.  Capteur capacitif (100 ; 203 ; 204) selon la revendication 1,
    **caractérisé en ce qu'**
    une paire d'électrodes adjacentes qui se trouvent sur le même composant stationnaire STATOR (104 ; 105 ; 501 ; 502 ; 601 ; 602 ; 603) et provenant respectivement du premier groupe d'électrodes de capacitance (11 ; 13 ; 401) et du second groupe d'électrodes de capacitance (12 ; 14 ; 402) et l'électrode de masse correspondante forment une paire de deux condensateurs variables.

4.  Capteur capacitif (100 ; 203 ; 204) selon l'une quelconque des revendications 1 à 3,
    **caractérisé en ce que**
    les électrodes sont des structures planes formées avec une section rectangulaire plate ou une section sectorielle plate ou une section triangulaire plate ou une section triangulaire sectorielle plate de structure plane, ou sont formées avec une section rectangulaire cylindrique, ou une section triangulaire cylindrique de surface cylindrique.

5.  Capteur capacitif (100 ; 203 ; 204) selon la revendication 4,
    **caractérisé en ce que** (Wg+Wgs)=2*(Wc+Wcs), Wcs≤Wc et Wc≤Wg≤(Wc+2*Wcs), où Wc et Wg sont la largeur ou la largeur angulaire de l'électrode du composant stationnaire STATOR (104 ; 105 ; 501 ; 502 ; 601 ; 602 ; 603) et du composant mobile MOVER (106 ; 503) respectivement, et Wcs et Wgs sont les espaces ou les espaces angulaires entre les électrodes adjacentes du composant stationnaire STATOR (104 ; 105 ; 501 ; 502 ; 601 ; 602 ; 603) et du composant mobile MOVER (106 ; 503).

6.  Capteur capacitif (100 ; 203 ; 204) selon la revendication 4,
    **caractérisé en ce que**,
    si les électrodes sont formées avec une section rectangulaire plate de structure plane, Wc est compris entre 0,001 mm et 200 mm, Wcs est compris entre 0,001 mm et 200 mm, et Lc est compris entre 0,005 mm et 200 mm, où Wc indique la largeur des électrodes du composant stationnaire STATOR (104 ; 105 ; 501 ; 502 ; 601 ; 602 ; 603), Wcs indique les espaces entre les électrodes adjacentes du composant stationnaire STATOR (104 ; 105 ; 501 ; 502 ; 601 ; 602 ; 603), et Lc indique la longueur des électrodes du composant stationnaire STATOR (104 ; 105 ; 501 ; 502 ; 601 ; 602 ; 603).

7.  Capteur capacitif (100 ; 203 ; 204) selon la revendication 4,

**caractérisé en ce que**,

si les électrodes sont formées avec une section sectorielle plate de structure plane ou une section rectangulaire cylindrique de surface cylindrique, Wc est compris entre 0,001° et 180°, Wcs est compris entre 0,001° et 270°, et Lc est compris entre 0,1 mm et 200 mm, où Wc indique la largeur des électrodes du composant stationnaire STATOR (104 ; 105 ; 501 ; 502 ; 601 ; 602 ; 603), Wcs indique les espaces angulaires entre les électrodes adjacentes du composant stationnaire STATOR (104 ; 105 ; 501 ; 502 ; 601 ; 602 ; 603), et Lc indique le rayon de rotation des électrodes du composant stationnaire STATOR (104 ; 105 ; 501 ; 502 ; 601 ; 602 ; 603).

8. Capteur capacitif (100 ; 203 ; 204) selon la revendication 4,
   **caractérisé en ce que**
   Lc ≠ Lg, Lc indique le rayon de rotation des électrodes du composant stationnaire STATOR (104 ; 105 ; 501 ; 502 ; 601 ; 602 ; 603), et Lg indique le rayon de rotation des électrodes de masse du composant mobile STATOR (104 ; 105 ; 501 ; 502 ; 601 ; 602 ; 603).

9. Capteur capacitif (100 ; 203 ; 204) selon la revendication 1,
   **caractérisé en ce qu'**
   il comprend en outre un composant stationnaire STATOR (104 ; 105 ; 501 ; 502 ; 601 ; 602 ; 603) et un composant mobile MOVER (106 ; 503) destinés à une mesure grossière, dans lequel le composant stationnaire STATOR (104 ; 105 ; 501 ; 502 ; 601 ; 602 ; 603) se compose de deux électrodes, la largeur ou la largeur angulaire des deux électrodes est indiquée par Wcl, et le composant mobile MOVER (106; 503) se compose d'une électrode de masse, et la largeur ou la largeur angulaire de l'électrode de masse est indiquée par Wsl, où $Wcl \leq Wc * m + Wcs * (m-1)$ et $Wsl \leq (Wc + Wcs) * m$.

10. Capteur capacitif (100 ; 203 ; 204) selon l'une quelconque des revendications 1 à 3,
    **caractérisé en ce que**
    le substrat électriquement isolé (17 ; 19 ; 21 ; 37 , 120 ; 404) du composant stationnaire STATOR (104 ; 105 ; 501 ; 502 ; 601 ; 602 ; 603) est configuré avec une couche de blindage électrique.

11. Capteur capacitif (100 ; 203 ; 204) selon la revendication 1,
    **caractérisé en ce que**
    le composant stationnaire STATOR (104 ; 105 ; 501 ; 502 ; 601 ; 602 ; 603) et le composant mobile MOVER (106 ; 503) sont fabriqués à partir d'un procédé de carte de circuit imprimé (PCB), d'un procédé de dépôt de plusieurs films minces, ou d'un procédé d'électronique imprimée.

12. Capteur capacitif (100 ; 203 ; 204) selon la revendication 1,
    **caractérisé en ce que**
    les composants mobiles MOVER (106 ; 503) sont fabriqués à partir d'une fine plaque ou d'un tube mince métallique et les deux surfaces de la fine plaque ou du tube mince servent d'électrodes de masse afin de former un groupe à capacitance plus variable avec davantage de composants stationnaires STATOR (104 ; 105 ; 501 ; 502 ; 601 ; 602 ; 603).

13. Système de détection et de mesure de déplacement capacitif combiné (201 ; 202 ; 205 ; 300 ; 400 ; 500 ; 600),
    **caractérisé en ce qu'**
    il comprend le capteur capacitif (100 ; 203 ; 204) selon l'une quelconque des revendications 1 à 12, comprenant en outre :
    un système de traitement de signaux destiné à mesurer les signaux électroniques du premier groupe d'électrodes de capacitance (11 ; 13 ; 401) et du second groupe d'électrodes de capacitance (12 ; 14 ; 402) sur les STATOR (104 ; 105 ; 501 ; 502 ; 601 ; 602 ; 603) afin d'obtenir des données de déplacement, dans lequel la masse du système de traitement de signaux est reliée à la masse du groupe d'électrodes sur les MOVER (106 ; 503).

Fig. 1a

Fig.1b

Fig.2

Fig.3

Fig.4

Fig.5

Fig.6

Fig.7

202

**MOVER**

50

60

**STATOR**

Fig.8

203

702

701

**STATOR-1**

71-1  72-1  71-2  72-2  71-3  72-3  71-4  72-4

d71-2  d72-2

78

Wss

75-1  75-2

**MOVER-1  and  MOVER-2**

76-1  76-2

705

79

d74-1  d73-2

73-1  74-1  73-2  74-2  73-3  74-3  73-4  74-4

703

**STATOR-2**

704

Fig.9

204

| | | STATOR-1 | | | | 802 |
|---|---|---|---|---|---|---|

81-1  82-1  81-2  82-2  81-3  82-3  81-4  82-4

d81-2    d82-2                88

85-1          85-2
Wss   MOVER-1  and  MOVER-2          805
86-1          86-2

d83-2    d84-2                89

83-1  84-1  83-2  84-2  83-3  84-3  83-4  84-4          803

STATOR-2          804

Fig.10

15-1    15-2

21

Fig.11a

15-1 & 16-1    15-2 & 16-2

Fig.11b

205

101

102

111-1 112-1 111-2 112-2 111-3 112-3 111-4 112-4 111-5 112-5 111-6 112-6 111-7 112-7 111-8 112-8

113-1 114-1 113-2 114-2 113-3 114-3 113-4 114-4 113-5 114-5 113-6 114-6 113-7 114-7 113-8 114-8

Wcl                    STATOR

120

117                    118                    103

Fig.12a

Fig.12b

Fig.12c

314 313 308 306 300

312

301 303

304 302 305

307 311

Fig.13a

101

103

102

Fig.13b

Fig.13c

Fig.14a

Fig.14b

Fig.15a

501、502

503

FIG.15b

605

601

602

603

604

600

606    608

607

Fig.16a

Fig.16b

**EP 3 076 136 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1327861 A1
- US 4636792 A
- DE 10133216 A1